# FASCICULE DE BREVET EUROPEEN

(11) **EP 1 093 213 B1**
(45) Date de publication et mention de la délivrance du brevet: **05.01.2011**
(21) Numéro de dépôt: 00402805.6
(22) Date de dépôt: 11.10.2000
(51) Int. Cl.: H02P 1/44

(54) **Pompe à démarrage à vitesse maximale**
Starten einer Pumpe mit maximaler Geschwindigkeit
Starting a pump with maximum speed

(30) Priorité: 12.10.1999 FR 9912707
(43) Date de publication de la demande: 18.04.2001
(73) Titulaire: POMPES SALMSON Société Anonyme à directoire dite:, 92500 Rueil Malmaison (FR)
(72) Inventeur: Kernours, Michel, 35370 Mondevert (FR); Ciron, Maurice, 53260 Entrammes (FR)
(74) Mandataire: Hirsch & Associés

(56) Documents cités:
- EP-A- 0 044 244
- DE-A- 3 105 444
- DE-A- 3 206 187
- US-A- 5 227 710

## Description

L'invention concerne le domaine des pompes pour fluides, et plus précisément le démarrage de telles pompes. Elle s'applique notamment aux circulateurs de chauffage, c'est-à-dire aux pompes qui sont utilisées dans les chaudières domestiques de chauffage central ou à proximité de celles-ci, pour assurer la circulation du fluide dans le circuit de chauffage.

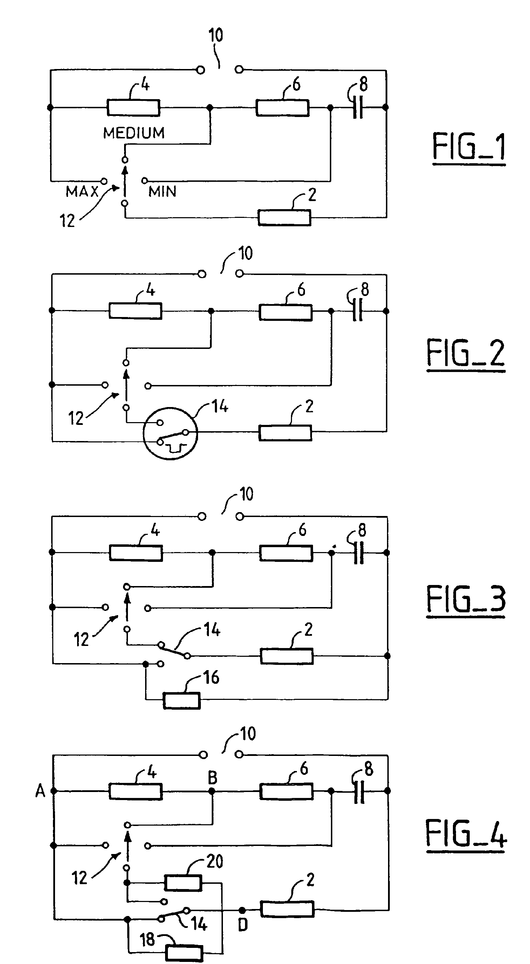

De tels circulateurs ou pompes sont bien connus en soi ; ils comprennent généralement un corps de pompe, dans lequel tourne une roue entraînée par un moteur. La figure 1 montre un schéma du circuit électrique du moteur des pompes commercialisées par la demanderesse sous dans la gamme référencée "NXL". Le moteur de ces pompes comprend un enroulement principal 2, et un enroulement auxiliaire, séparé en deux par un contact relié au fil formant l'enroulement sensiblement en son milieu, et qui définit ainsi deux parties 4 et 6 d'enroulement auxiliaire. Les deux parties de l'enroulement auxiliaire sont montées en série avec un condensateur 8 assurant le déphasage entre l'enroulement auxiliaire et l'enroulement principal. L'ensemble série de l'enroulement auxiliaire et du condensateur est monté aux bornes de l'alimentation de puissance 10. Cette alimentation de puissance 10 est par exemple une source de tension monophasée alternative de 230 V et 50 Hz.

Le moteur est muni d'un sélecteur de vitesse 12 à trois positions, qui permet de sélectionner trois vitesses de rotation de la pompe. Le choix d'une vitesse peut notamment dépendre de la nature de l'installation dans laquelle la pompe est utilisée. Le sélecteur de vitesse relie sélectivement une borne de l'enroulement principal 2 à l'une ou à l'autre des extrémités de l'enroulement auxiliaire, ou au milieu de l'enroulement auxiliaire. L'autre borne de l'enroulement principal est reliée à la source de puissance 10 du côté du condensateur 8.

Dans la première position du sélecteur de vitesse, marquée "max" sur la figure, l'enroulement principal est branché en parallèle à l'ensemble série de l'enroulement secondaire et du condensateur ; cette position correspond à la vitesse maximale du moteur. Dans la deuxième position du sélecteur de vitesse, marquée "medium" sur la figure, enroulement principal est connecté au milieu de l'enroulement secondaire, et la vitesse est la vitesse médiane. Dans la troisième position du sélecteur de vitesse marquée "min" sur la figure, l'enroulement principal est monté en parallèle au condensateur 8 ; la vitesse est alors minimale. Ce circuit électrique donne entière satisfaction.

Le document US-A-5 227 710 décrit un moteur monophasé à vitesses multiples. Le moteur à courant alternatif est prévu pour fonctionner à partir d'une source de courant alternatif monophasé. Pour un fonctionnement à haute vitesse, des premier et deuxième enroulements sont alimentés avec une tension d'alimentation via un commutateur à positions multiples. Ces enroulements sont déphasés angulairement et électriquement de 90 degrés l'un par rapport à l'autre sur le noyau de stator et sont couplés inductivement au rotor du moteur. Le fonctionnement du moteur en couple maximum de départ et en vitesse maximum est réalisé dans ces conditions de fonctionnement. Lorsque le commutateur fonctionne en position de basse vitesse, l'impédance du deuxième enroulement est augmentée.

Un problème qui se pose pour les pompes, et notamment pour les pompes de circulation des chaudières, est celui du démarrage. Au démarrage, la source de puissance 10 est allumée, ou reliée aux bornes du moteur.

En effet, le couple de démarrage d'un moteur est proportionnel à la vitesse de rotation de ce moteur. Ainsi, le couple de démarrage est proportionnel à la vitesse sélectionnée grâce au sélecteur de vitesse. À la mise sous tension, ou si la pompe est grippée par une longue période d'inactivité, le démarrage peut s'avérer difficile dans la vitesse la plus faible.

L'art antérieur propose plusieurs solutions.

Le document DE 31 05 444 propose un moteur comprenant un sélecteur de vitesse. En position de vitesse réduite, un condensateur est monté en série avec un élément présentant une faible résistance à froid, l'ensemble étant monté en parallèle avec un autre condensateur. A froid les capacités s'ajoutent et la vitesse du moteur est élevée. Du fait du courant traversant l'élément, la température de l'élément augmente, et par voie de conséquence, sa résistance augmente. Il en résulte une diminution de la capacité utile d'où une diminution de la vitesse du moteur.

Le document DE 32 06 187 décrit un dispositif qui, au démarrage, alimente le moteur à la vitesse maximale par un triac rendu passant. Après le démarrage, un autre triac est rendu passant et le moteur est alimenté par l'intermédiaire d'un sélecteur de vitesse. La commande se fait par une porte NAND reliée à un circuit RC et commandée par un circuit diviseur de tension.

Le document EP 0 044 244 décrit un moteur comprenant un interrupteur commandé sur lequel est monté en parallèle une résistance à coefficient de température positif (CTP), pour court-circuiter cet interrupteur au cours de la période de démarrage.

Les solutions proposées dans l'art antérieur pour le démarrage des moteurs sont compliquées à mettre en oeuvre et de ce fait, l'invention propose une solution plus simple pour remédier à ce problème. Elle permet d'assurer avec un couple maximal le démarrage d'une pompe, indépendamment de la vitesse sélectionnée, et limite donc la probabilité de blocage des pompes lors de leur démarrage. L'invention s'applique avantageusement aux moteurs des circulateurs de chaudières, et évite les problèmes posés par les périodes d'inactivité de ces circulateurs.

Plus précisément, l'invention propose un moteur de pompe présentant un sélecteur de vitesse et des moyens pour court-circuiter le sélecteur au démarrage et faire fonctionner le moteur à vitesse maximale, caractérisé en ce que les moyens comprennent un commutateur constitué d'un bilame ou d'un contact inverseur thermique.

Dans un mode de réalisation, les moyens court-circuitent le sélecteur uniquement pendant une durée prédéterminée au démarrage du moteur. Cette durée peut être comprise entre 5 et 30 s.

Dans un mode de réalisation, lorsque le commutateur est un contact inverseur thermique le moteur comporte au moins un élément chauffant en contact thermique avec le commutateur. L'élément chauffant peut être une résistance CTP.

Dans un autre mode de réalisation, lorsque le commutateur est un contact inverseur thermique, le moteur comporte deux éléments chauffants respectivement montés aux bornes du commutateur, un élément chauffant étant court-circuité dans chaque position du commutateur. Au moins un des éléments chauffants, de préférence les deux, comprend une résistance CTP.

Dans un mode de réalisation, le moteur comprend un enroulement principal et un enroulement auxiliaire en deux parties ou plus, monté en série avec un condensateur, le sélecteur de vitesse reliant sélectivement une extrémité de l'enroulement principal à l'une des extrémités, à l'autre extrémité ou entre deux parties de l'enroulement auxiliaire, l'autre extrémité de l'enroulement principal étant reliée à la borne du condensateur non reliée à l'enroulement auxiliaire.

Dans un mode particulier de réalisation, le commutateur relie dans une position l'extrémité de l'enroulement principal, non reliée au condensateur, au sélecteur de vitesse et relie dans une autre position l'extrémité de l'enroulement principal, non reliée au condensateur, à l'extrémité de l'enroulement auxiliaire non reliée au condensateur.

Dans un mode de réalisation, lorsque le commutateur est un contact inverseur thermique en contact thermique avec l'élément chauffant, celui-ci peut être branché d'une part à l'extrémité de l'enroulement principal reliée au condensateur et d'autre part à l'extrémité de l'enroulement auxiliaire non reliée au condensateur.

Dans un autre mode de réalisation, lorsque le commutateur est un contact inverseur thermique en contact thermique avec deux éléments chauffants, l'un des éléments chauffants est branché d'une part à l'extrémité de l'enroulement principal non reliée au condensateur et d'autre part à l'extrémité de l'enroulement auxiliaire non reliée au condensateur, et en ce que l'autre des éléments chauffants est branché d'une part à l'extrémité de l'enroulement principal non reliée au condensateur et d'autre part à la borne du sélecteur de vitesse reliée au commutateur.

Dans un autre mode de réalisation, le sélecteur est commandable à distance,

L'invention propose aussi une pompe présentant un tel moteur.

D'autres caractéristiques et avantages de l'invention apparaîtront à la lecture de la description qui suit de modes de réalisation de l'invention, donnée à titre d'exemple et en référence aux dessins annexés qui montrent :
- figure 1 un schéma du circuit électrique d'un moteur de pompe de l'art antérieur ;
- figure 2, un schéma du circuit électrique d'un moteur de pompe selon l'invention ;
- figure 3, un schéma du circuit électrique d'un moteur de pompe selon un autre mode de réalisation de l'invention ;
- figure 4, un schéma du circuit électrique d'un moteur de pompe selon un autre mode de réalisation de l'invention, avec deux éléments chauffants.

L'invention propose, pour régler le problème de démarrage des moteurs de pompes, que le circuit assure un démarrage du moteur en vitesse maximale, quelle que soit la position du sélecteur de vitesse. Après le démarrage de la pompe, la vitesse de rotation du moteur de la pompe est de nouveau déterminée par la position du sélecteur de vitesse. De la sorte, l'invention permet de résoudre le problème du couple de démarrage de la pompe, en assurant un démarrage avec un couple maximal. Après le démarrage, le régime du moteur est déterminé par la position du sélecteur, de telle sorte que l'invention est sans influence sur le fonctionnement du moteur.

La figure 2 montre un schéma du circuit électrique d'un moteur de pompe selon l'invention. Le circuit de la figure 2 est identique à celui de la figure 1, à cela près qu'il présente un commutateur qui court-circuite le sélecteur lors du démarrage de la pompe, et place le moteur dans la position de fonctionnement à la vitesse maximale ; est donc prévu un commutateur entre le sélecteur et l'enroulement principal. Le commutateur 14 relie la borne de l'enroulement principal 2 qui n'est pas reliée à l'alimentation de puissance, soit au sélecteur de vitesse 12, soit directement à la borne de l'alimentation de puissance 10 située du côté opposé au condensateur 8. Dans la première position du commutateur, le fonctionnement du circuit de la figure 2 est exactement identique à celui du circuit de la figure 1, et la vitesse de rotation du moteur dépend de la position du sélecteur. Dans la seconde position, le sélecteur est isolé, et l'enroulement principal est branché aux bornes de l'alimentation de puissance : en d'autres termes, le circuit est alors équivalent du circuit dans la position de vitesse maximale du sélecteur.

Le fonctionnement du circuit de la figure 2 est le suivant. Au démarrage de la pompe, l'alimentation de puissance commence à alimenter les enroulements ; le commutateur se trouve dans la seconde position, et court-circuite le sélecteur, de telle sorte que le moteur se trouve dans la position de vitesse maximale. Le moteur peut donc démarrer à la vitesse maximale, et éviter de rester bloqué du fait de la pression ou d'un grippage. Après le démarrage, le commutateur passe dans la première position, et la vitesse de rotation du moteur est alors déterminée par la position du sélecteur. La durée pendant laquelle le commutateur peut rester dans la seconde position dépend des applications, et peut notamment dépendre de la durée pour attendre un régime permanent de fonctionnement, ou assurer une mise sous pression ; une durée de 5 à 30 s est appropriée pour les applications de pompes de chauffage.

On peut utiliser diverses solutions pour réaliser le commutateur utilisé dans l'invention. Dans un mode de réalisation, le commutateur est un bilame, qui bascule de la seconde position à la première position sous l'effet du courant qui le traverse. L'avantage de cette solution est la simplicité et la robustesse du dispositif. La résistance du bilame est élevée, de telle sorte que l'énergie consommée par le bilame après le démarrage lorsque le commutateur est dans la seconde position est faible. Plus précisément, la résistance du bilame est dimensionnée d'une part pour permettre le basculement après 5 à 30 secondes de mise sous tension. D'autre part, la résistance du bilame est telle que le bilame reste ensuite dans une position basculée lors du fonctionnement de la pompe, indépendamment de la vitesse sélectionnée.

On peut aussi utiliser d'autres types de commutateurs de temporisation ; la figure 3 montre un schéma d'un circuit dans lequel le commutateur est constitué d'un contact inverseur thermique, un bilame par exemple qui est déclenché par un élément chauffant. Le circuit de la figure 3 est identique à celui de la figure 2, à cela près qu'il comprend en outre un élément chauffant 16, qui est branché aux bornes de l'alimentation de puissance, L'élément chauffant est en contact thermique avec le commutateur 14. L'élément chauffant peut être constitué d'une simple résistance, une résistance CTP par exemple. La valeur de cette résistance est fonction de la chaleur à appliquer à l'inverseur thermique pour le déclencher.

La solution de la figure 3 a l'avantage de permettre un réglage plus simple de la durée pendant laquelle le moteur fonctionne à la vitesse maximale au démarrage ; une simple variation de la valeur de la résistance permet de modifier l'énergie dégagée par cette résistance par effet Joule, et permet ainsi de régler la durée de fonctionnement à la vitesse maximale. Dans le montage de la figure 3, l'élément chauffant est alimenté en permanence lors du fonctionnement du moteur ; ceci n'est pas un inconvénient dans la mesure où la résistance de l'élément chauffant peut être forte, la chaleur à dégager pour déclencher le commutateur étant faible.

D'autres solutions sont encore possibles pour réaliser le commutateur de l'invention. On peut utiliser des composants numériques, ou d'autres composants assurant une fonction de commutation après une durée prédéterminée réglable ou non. On peut aussi utiliser un sélecteur, qui est toujours au démarrage dans la position correspondant à la vitesse maximale ; cette solution revient à intégrer un temporisateur dans le sélecteur, la vitesse sélectionnée par l'utilisateur n'étant validée qu'après l'écoulement d'une période prédéterminée à partir du démarrage.

Dans un autre mode de réalisation de l'invention, le sélecteur 12 est susceptible d'être commandé à distance ; dans ce cas, il devient possible de commander la vitesse de rotation du moteur après démarrage, sans pour autant avoir à accéder physiquement à la pompe. Une telle commande à distance peut être utile dans les installations où un réglage de la vitesse s'impose non seulement à l'installation, mais au cours du fonctionnement. Tel est notamment le cas pour les installations où le circulateur assure une double fonction :
- circulateur d'eau de chauffage, et dans ce cas un faible débit est suffisant, donc une vitesse faible est appropriée ;
- circulateur d'eau du circuit primaire d'eau chaude sanitaire, dans ce cas un débit élevé est nécessaire, donc une vitesse élevée s'impose.

On peut prévoir une télécommande, ou une commande à distance à l'aide de fils.

La figure 4 montre un schéma du circuit électrique d'un moteur de pompe selon un autre mode de réalisation de l'invention, avec deux éléments chauffants, au moins un élément étant une résistance CTP. Le circuit de la figure 4 est identique à celui de la figure 2, à cela près que sont prévu deux éléments chauffants 18 et 20. Le premier de ces éléments chauffants est branché d'une part entre le commutateur 14 et l'enroulement primaire 2, et d'autre part à la borne de l'alimentation de puissance 10 du côté de l'enroulement auxiliaire 4. Les points correspondants sont notés D et A sur la figure. Le second de ces éléments chauffants est branché d'une part entre le commutateur 14 et l'enroulement primaire 2, et d'autre part à la borne du sélecteur de vitesse reliée au commutateur 14. En d'autres termes, le premier élément chauffant 18 est monté en parallèle aux bornes du commutateur 14 qui sont reliées au démarrage, alors que le second élément chauffant 20 est monté en parallèle aux bornes du commutateur 14 qui sont reliées en régime normal. En d'autres termes, chacun des éléments chauffant est monté en parallèle aux bornes du commutateur, de sorte à être court-circuité dans une des positions du commutateur. On note sur la figure B le point du circuit entre les deux parties 4 et 6 de l'enroulement auxiliaire. On note sur la figure C le point du circuit entre la partie 6 de l'enroulement auxiliaire et le condensateur 8.

Le fonctionnement du circuit de la figure 4 est le suivant. Au repos, le commutateur 14 se trouve dans la position de démarrage, dans laquelle il relie les points A et D.

Lorsque le sélecteur est en position de vitesse maximale, les points A et D sont au même potentiel électrique, quelle que soit la position du commutateur. Le moteur démarre en vitesse maximale, les éléments chauffants ne chauffent pas, et le commutateur ne bouge pas.

Lorsque le sélecteur est en position de vitesse médiane, le commutateur est en position de démarrage, et le moteur démarre en vitesse maximale. Le premier élément chauffant ne chauffe pas, mais le deuxième élément chauffant chauffe, du fait de la tension existant entre les points A et B, et donc entre les points D et B, soit aux bornes du deuxième élément chauffant. De même, lorsque le sélecteur est en position de vitesse minimale, le commutateur est en position de démarrage, et le moteur démarre en vitesse maximale ; le premier élément chauffant ne chauffe pas, mais le deuxième élément chauffant chauffe, du fait de la tension existant entre les points A et C, et donc entre les points D et C, soit aux bornes du deuxième élément chauffant.

Après une durée dépendant du commutateur et la résistance du deuxième élément chauffant, le commutateur passe dans la position de marche, dans laquelle il relie le sélecteur de vitesse et l'enroulement primaire. Le moteur passe alors à la vitesse sélectionnée par le sélecteur de vitesse. La tension est nulle aux bornes du deuxième élément chauffant, qui cesse de chauffer. Il existe alors une tension aux bornes du premier élément chauffant, et celui-ci chauffe de sorte à maintenir le commutateur dans la position de marche.

Après l'arrêt du moteur, les deux résistances cessent de chauffer, et le commutateur repasse dans la position de démarrage. On assure ainsi un démarrage à vitesse maximale.

Les deux éléments chauffants peuvent être des thermistances. La valeur des résistances est adaptée en fonction des vitesses choisies, et de la durée pendant laquelle le moteur doit rester à la vitesse maximale ; plus précisément, pour un sélecteur de vitesse en position de vitesse médiane, la tension appliquée au deuxième élément chauffant au démarrage est la tension entre les points B et D, avec le commutateur en position de démarrage. Pour un sélecteur de vitesse en position de vitesse minimale, la tension appliquée au deuxième élément chauffant au démarrage est la tension entre les points C et D, avec le commutateur en position de démarrage. On peut déterminer la valeur de la résistance de l'élément chauffant en fonction de ces deux tensions.

Lorsque le sélecteur de vitesse est en position de vitesse médiane, la tension appliquée au premier élément chauffant après le démarrage est la tension entre les points B et D, avec le commutateur en position de marche. Pour un sélecteur de vitesse en position de vitesse minimale, la tension appliquée au premier élément chauffant au démarrage est la tension entre les points C et D, avec le commutateur en position de marche. On peut de nouveau déterminer la valeur de la résistance de l'élément chauffant en fonction de ces deux tensions.

Bien entendu, la présente invention n'est pas limitée aux exemples et modes de réalisation décrits et représentés, mais elle est susceptible de nombreuses variantes suivant les revendications. Ainsi, dans le mode de réalisation des figures, le moteur est un moteur monophasé ; il est clair que l'invention s'applique aussi au cas des moteurs présentant plus d'une phase, et présentant un sélecteur de vitesse.

Dans les exemples, le sélecteur présente trois positions. L'invention s'applique à d'autres nombres de vitesses possibles, et donc à une pompe multi-vitesses.

## Revendications

1. Un moteur de pompe présentant un sélecteur de vitesse (12) et des moyens pour court-circuiter le sélecteur (12) au démarrage et faire fonctionner le moteur à vitesse maximale, **caractérisé en ce que** les moyens comprennent un commutateur (14) constitué d'un bilame ou d'un contact inverseur thermique.

2. Le moteur de la revendication 1, **caractérisé en ce que** lesdits moyens court-circuitent le sélecteur uniquement pendant une durée prédéterminée au démarrage du moteur.

3. Le moteur de la revendication 1 ou 2, **caractérisé en ce que** lesdits moyens court-circuitent le sélecteur au démarrage pendant une durée comprise entre 5 et 30 s.

4. Le moteur de la revendication 1, 2 ou 3, **caractérisé en ce que** le commutateur est un contact inverseur thermique en contact thermique avec au moins un élément chauffant (16).

5. Le moteur de la revendication 4, **caractérisé en ce que** l'élément chauffant (16) est une résistance CTP.

6. Le moteur de la revendication 1, 2 ou 3, **caractérisé en ce que** le commutateur est un contact inverseur thermique et **en ce qu'**il comporte en outre deux éléments chauffants respectivement montés aux bornes du commutateur, un élément chauffant étant court-circuité dans chaque position du commutateur.

7. Le moteur de la revendication précédente, **caractérisé en ce qu'**au moins un des éléments chauffants, de préférence les deux, comprend une résistance CTP.

8. Le moteur de l'une des revendications précédentes, **caractérisé en ce qu'**il comprend un enroulement principal et un enroulement auxiliaire en deux parties (4, 6) ou plus, monté en série avec un condensateur (8), et **en ce que** le sélecteur de vitesse (12) relie sélectivement une extrémité de l'enroulement principal (2) à l'une des extrémités, à l'autre extrémité ou entre deux parties de l'enroulement auxiliaire, l'autre extrémité de l'enroulement principal étant reliée à la borne du condensateur non reliée à l'enroulement auxiliaire.

9. Le moteur de la revendication 8, **caractérisé en ce que** le commutateur (14) relie dans une position l'extrémité de l'enroulement principal, non reliée au condensateur, au sélecteur de vitesse et relie dans une autre position l'extrémité de l'enroulement principal, non reliée au condensateur, à l'extrémité de l'enroulement auxiliaire non reliée au condensateur.

10. Le moteur de la revendication 9, **caractérisé en ce que** le commutateur (14) est un contact inverseur thermique en contact thermique avec l'élément chauffant (16), et **en ce que** celui-ci est branché d'une part à l'extrémité de l'enroulement principal (2) reliée au condensateur et d'autre part à l'extrémité de l'enroulement auxiliaire (4) non reliée au condensateur.

11. Le moteur de la revendication 9, **caractérisé en ce que** le commutateur est un contact inverseur thermique en contact thermique avec deux éléments chauffants, et **en ce que** l'un des éléments chauffants (18) est branché d'une part à l'extrémité de l'enroulement principal (2) non reliée au condensateur et d'autre part à l'extrémité de l'enroulement auxiliaire (4) non reliée au condensateur, et **en ce que** l'autre des éléments chauffants (20) est branché d'une part à l'extrémité de l'enroulement principal (2) non reliée au condensateur et d'autre part à la borne du sélecteur de vitesse reliée au commutateur (14).

12. Le moteur de l'une des revendications précédentes, **caractérisé en ce que** le sélecteur est commandable à distance.

13. Une pompe présentant un moteur selon l'une des revendications précédentes.

## Claims

1. A pump motor having a speed selector (12) and means to bypass the speed selector (12) when the motor is starting and to run it at maximum speed, **characterized in that** the means comprise a switch (14) consisting of a bimetal or a thermal changeover contact.

2. The motor of claim 1, **characterized in that** said means bypass the speed selector only during a predetermined period while the motor is starting.

3. The motor of claim 1 or 2, **characterized in that** said means bypass the speed selector for a period of between 5 and 30 s.

4. The motor of claim 1, 2 or 3, **characterized in that** the switch is a thermal changeover contact in thermal contact with at least one heating element (16).

5. The motor of claim 4, **characterised in that** the heating element (16) is a PTC resistor.

6. The motor of claim 1, 2 or 3, **characterized in that** the switch is a thermal changeover contact and **in that** it further comprises two heating elements respectively mounted across the switch, one heating element being short-circuited in each switch position.

7. The motor of the previous claim, **characterized in that** at least one heating element, preferably both, comprises a PTC resistor.

8. The motor according to one of the preceding claims, **characterized in that** it comprises a main winding and an auxiliary winding in two parts (4, 6) or more, connected in series with a capacitor (8), and **in that** the speed selector (12) selectively connects one end of the main winding (2) to one of the ends, to the other end or between two parts of the auxiliary winding, the other end of the main widing being connected to that terminal of the capacitor not connected to the auxiliary winding.

9. The motor of claim 8, **characterized in that** the switch (14) in one position connects the end of the main winding, not connected to the capacitor, to the speed selector and, in the other position, the end of the main winding, not connected to the capacitor, to the end of the auxiliary winding not connected to the capacitor.

10. The motor of claim 9, wherein the switch (14) is a thermal changeover contact in thermal contact with the heating element (16), and in that it is connected firstly to the end the main winding (2) connected to the capacitor and at the other end thereof to the auxiliary winding (4) not connected to the capacitor.

11. The motor of claim 9, **characterized in that** the switch is a thermal changeover contact in thermal contact with two heating elements, and **in that** one of heating elements (18) is connected firstly to the end of the main winding (2) not connected to the capacitor and at the other end to the end of the auxiliary winding (4) not connected to the capacitor, and **in that** the other of the two heating elements (20) is connected firstly to the end of the main winding (2) not connected to the capacitor and at the other end to the terminal of the speed selector connected to the switch (14).

12. The motor according to one of the preceding claims, **characterized in that** the speed selector can be controlled remotely.

13. A pump having a motor according to any one of the preceding claims.

## Patentansprüche

1. Pumpenmotor mit einem Geschwindigkeitswählschalter (12) und Mitteln, um den Wählschalter (12) beim Einschalten kurzzuschließen und den Motor mit Höchstgeschwindigkeit laufen zu lassen, **dadurch gekennzeichnet, dass** die Mittel einen Umschalter (14) umfassen, der aus einem Bimetallstreifen oder aus einem thermischen Umschaltkontakt besteht.

2. Motor nach Anspruch 1, **dadurch gekennzeichnet, dass** diese Mittel den Wählschalter beim Einschalten des Motors nur während einer vorbestimmten Dauer kurzschließen.

3. Motor nach Anspruch 1 oder 2, **dadurch gekennzeichnet, dass** die Mittel den Wählschalter beim Einschalten zwischen 5 und 30 Sekunden lang kurzschließen.

4. Motor nach Anspruch 1, 2 oder 3, **dadurch gekennzeichnet, dass** der Umschalter ein thermischer Umschaltkontakt ist, der mit mindestens einem Heizelement (16) in thermischem Kontakt ist.

5. Motor nach Anspruch 4, **dadurch gekennzeichnet, dass** das Heizelement (16) ein PTC-Widerstand ist.

6. Motor nach Anspruch 1, 2 oder 3, **dadurch gekennzeichnet, dass** der Umschalter ein thermischer Umschaltkontakt ist, und **dadurch**, dass er außerdem zwei Heizelemente umfasst, die jeweils an den Anschlüssen des Umschalters montiert sind, wobei in jeder Position des Umschalters ein Heizelement kurzgeschlossen wird.

7. Motor nach dem vorherigen Anspruch, **dadurch gekennzeichnet, dass** mindestens eines der Heizelemente, bevorzugt beide, einen PTC-Widerstand umfassen.

8. Motor nach einem der vorherigen Ansprüche, **dadurch gekennzeichnet, dass** er eine Hauptwicklung und eine Hilfswicklung aus zwei Teilen (4, 6) oder mehr umfasst, die mit einem Kondensator (8) in Reihe geschaltet sind, und **dadurch**, dass der Geschwindigkeitswählschalter (12) ein Ende der Hauptwicklung (2) auf selektive Weise mit einem der Enden, mit dem anderen Ende oder zwischen beiden Teilen der Hilfswicklung verbindet, wobei das andere Ende der Hauptwicklung mit dem Anschluss des Kondensators verbunden ist, der nicht mit der Hilfswicklung verbunden ist.

9. Motor nach Anspruch 8, **dadurch gekennzeichnet, dass** der Umschalter (14) in einer Position das Ende der Hauptwicklung, das nicht mit dem Kondensator verbunden ist, mit dem Geschwindigkeitswählschalter verbindet und in einer anderen Position das Ende der Hauptwicklung, das nicht mit dem Kondensator verbunden ist, mit dem Ende der Hilfswicklung verbindet, das nicht mit dem Kondensator verbunden ist.

10. Motor nach Anspruch 9, **dadurch gekennzeichnet, dass** der Umschalter (14) ein thermischer Umschaltkontakt ist, der mit dem Heizelement (16) in thermischem Kontakt ist, und **dadurch**, dass dieser einerseits mit dem Ende der Hauptwicklung (2) verbunden ist, das mit dem Kondensator verbunden ist, und andrerseits mit dem Ende der Hilfswicklung (4), das nicht mit dem Kondensator verbunden ist.

11. Motor nach Anspruch 9, **dadurch gekennzeichnet, dass** der Umschalter ein thermischer Umschaltkontakt ist, der mit zwei Heizelementen in thermischem Kontakt ist, und **dadurch**, dass das eine der Heizelemente (18) einerseits mit dem Ende der Hauptwicklung (2) verbunden ist, das nicht mit dem Kondensator verbunden ist, und andrerseits mit dem Ende der Hilfswicklung (4), das nicht mit dem Kondensator verbunden ist, und **dadurch**, dass das andere der Heizelemente (20) einerseits mit dem Ende der Hauptwicklung (2) verbunden ist, das nicht mit dem Kondensator verbunden ist, und andrerseits mit dem Anschluss des Geschwindigkeitswählschalters, der mit dem Umschalter (14) verbunden ist.

12. Motor nach einem der vorherigen Ansprüche, **dadurch gekennzeichnet, dass** der Wählschalter fernsteuerbar ist.

13. Pumpe, umfassend einen Motor nach einem der vorherigen Ansprüche.
